Europäisches Patentamt

European Patent Office

Office européen des brevets

(11) Publication number: **0 149 524**
**B1**

(12) **EUROPEAN PATENT SPECIFICATION**

(45) Date of publication of patent specification: **23.08.89**  (51) Int. Cl.⁴: **G 09 F 7/10**

(21) Application number: **85300124.6**

(22) Date of filing: **08.01.85**

(54) **Display apparatus.**

(30) Priority: **16.01.84 GB 8401056**

(43) Date of publication of application:
**24.07.85 Bulletin 85/30**

(45) Publication of the grant of the patent:
**23.08.89 Bulletin 89/34**

(84) Designated Contracting States:
**BE CH DE FR IT LI LU NL**

(56) References cited:
**EP-A-0 079 148**
**DE-B-1 090 948**
**US-A-1 621 810**
**US-A-4 344 244**

(73) Proprietor: **UNIVERSAL COMPONENTS LIMITED**
**Universal House Pennywell Road**
**Bristol Avon, BS5 oTJ (GB)**

(72) Inventor: **Hill, Martin Leslie**
**3 Church Road Sneyd Park**
**Bristol (GB)**
Inventor: **Hill, Roger William**
**38 Church Road Sneyd Park**
**Bristol (GB)**

(74) Representative: **Stuart, Ian Alexander et al**
**MEWBURN ELLIS & CO. 2/3 Cursitor Street**
**London EC4A 1BQ (GB)**

Courier Press, Leamington Spa, England.

## Description

The present invention relates to display apparatus, and particularly to means for mounting signs to walls and ceilings or other surfaces.

EP—A—0 079 148 (Dobson) discloses a display apparatus that employs elongate display members that are extrusions of C-section, having narrowed mouths at the rear. Supports have mounting portions for mounting to a surface. These have supporting means which project away from the surface. They are insertable into an extrusion, through the narrowed rear mouth, to provide support. Thus a display member is supportable in a single orientation (parallel to a surface, and with its mouth facing that surface).

US—A—4 344 244 also discloses display members defining channels having rearwardly facing narrowed mouths through which supporting means project.

According to the present invention, there is provided display apparatus comprising at least one elongate display member which is adapted to bear indicia for display, and at least one support for the display member; said display member being an elongate extrusion of C-section, defining a channel open at both ends, the extrusion having wall portions at one side defining between them a narrowed mouth of the channel, and an opposed base wall portion joined to said mouth defining wall portions by opposed arm pieces; said support comprising a mounting portion mountable to a surface, and at least one display member supporting means projecting away from said mounting portion; said display member supporting means and said channel being mutually dimensioned so that said supporting means is insertable into the channel to provide support for the display member; characterised in that the extrusion has an opposed pair of internal ribs that extend parallel to said base wall portion and divide the channel interior into two longitudinally extending cavities, each of which is open at both ends of the display member; a first said cavity bounded in part by said mouth-defining wall portions and said internal ribs and communicating with the narrowed mouth, and the second cavity being bounded in part by said base wall portion and said internal ribs; and said support mounting portion has first and second arm portions disposed in an L-configuration, said supporting means projecting from the first arm portion; and each of said cavities and the display member supporting means being mutually dimensioned so that said supporting means is insertable in the longitudinal direction of the display member selectively into either cavity through either end thereof to provide said support; the spacing of the supporting means from the second arm portion being such that the display member is supportable by the supporting means selectively in either of two configurations, namely in either a first configuration in which said base wall portion is substantially in contact with the second arm portion and the supporting means is inserted in the cavity bounded by said base wall portion; or a second configuration in which the second arm portion is substantially in contact with the mouth-defining wall portions, and the supporting means is inserted in the cavity which communicates with the narrowed mouth.

Preferably the support is selectively mountable in two configurations such that the supporting means extends outwardly away from or substantially parallel to the surface.

A display apparatus may include two supports, mountable with their supporting means mutually opposed and arranged to be received within the channel at respective ends of a display member.

The or each support may be an elongate element having a multiplicity of supporting means along its length, whereby a multiplicity of display members are supportable. Preferably the supporting means are so spaced that display members are mountable with adjacent display members substantially in contact so as to present a substantially flush composite surface. An elongate element may be arranged to be separable into desired lengths containing any number of supporting means. Display members may be of different sizes, having channels receiving one or a plurality of adjacent supporting means.

A slat may be slidably received in the first cavity with a portion of a surface of the slat visible through the mouth. Depending on which cavity receives the projection means, this mouth may face in either direction. A cavity may have means defining elongate ribs projecting into it, so as to define two substantially parallel narrower part-cavities, one behind the other. This is particularly useful for a forwardly-open cavity. For example, the rear one of the part-cavities may contain a slat bearing alternative information such as "IN" and "OUT", and the front part-cavity may contain a short slat which is displaceable so as to obscure selectively one of these. The supporting means may have grooves for receiving the elongate ribs defining the part-cavities. This may increase the positiveness of the support.

An embodiment of the invention will now be described in greater detail with reference to the accompanying drawings, in which:

Fig. 1 is a plan view of a support;

Fig. 2 is a side elevation viewed in the direction of arrow II in Fig. 1;

Fig. 3 is a front elevation of the support; and

Fig. 4 is a front elevation of three display members of different sizes.

The support 10 comprises a generally L-shaped elongate bracket or mounting portion 12. The shorter leg of the L has, at its free end, an upstanding flange 14 projecting in the same sense as the other leg. At an intermediate region of the shorter leg, close to the longer one, there are a multiplicity of tongues 16 projecting generally parallel to the longer leg. The tongues 16 are arranged in a row, with alternately large and small spacings between them. For most of the length of a tongue 16, its cross-section is generally rectangular (possibly with bevelled edges), and with a slot 17 in that face which faces the nearer adjacent tongue 16. A free end portion 18 narrows to facilitate insertion of the tongue into a channel to serve as a supporting means, as will be described later.

Between adjacent tongues 16 with the larger spacing, there are respective L-shaped channels 20 in the bracket 12. That is, the thickness of the bracket 12 is reduced. The channels 20 have bevelled edges 22. The bottom of the channels 20 in the longer legs of the bracket 12 are penetrated by elongate apertures 24 which run parallel to the tongues 16. There could also be corresponding apertures in the short legs of the bracket 12, but for the sake of appearances we prefer to have instead panels 26 which can be knocked out if required.

The support 10 is provided with regularly-spaced transverse lines of weakness 28. These extend between adjacent closely-spaced tongues 16. Preferably, the lines extend on the inside face of the flange 14 (facing towards the tongues 16), so that they are not generally visible.

It is preferred to form the support from plastics material, and preferably the main forming step is performed by injection moulding. It is convenient simultaneously to form a pair of spacer members 30, whose function will be described later. Thus, the moulding can give a support 10 with the spacers 30 attached by slender nibs 32, so that they can be easily detached on site.

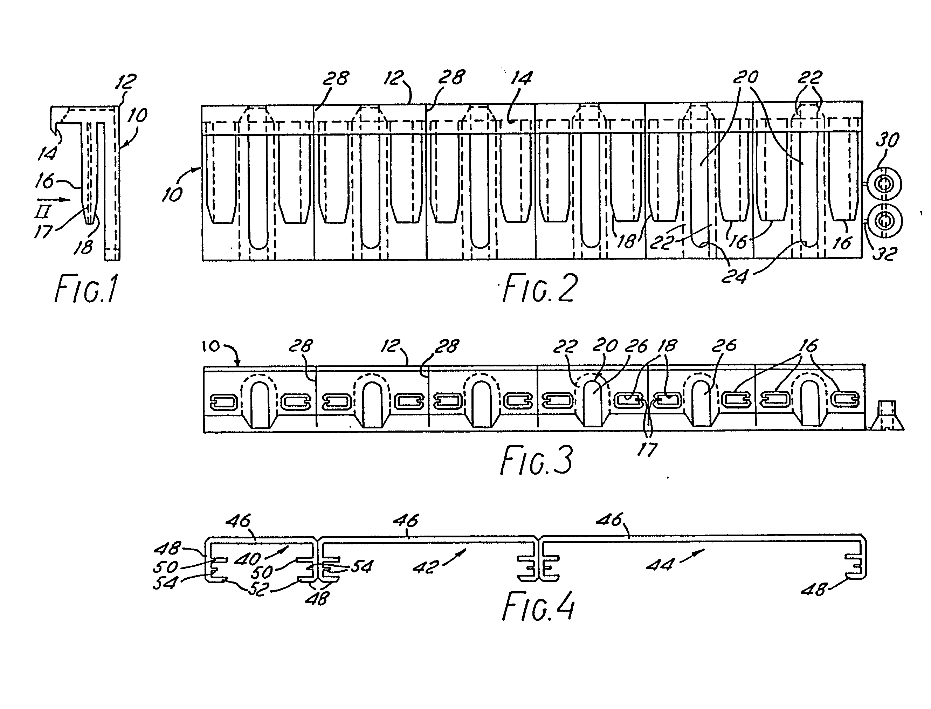

Fig. 4 shows three elongate display members 40, 42, 44. Each is an extrusion of constant section, having a base 46 and a pair of opposed arm pieces 48. Each arm piece 48 has an inwardly projecting flange 50 extending parallel to the base 46 from the middle of the piece 48. The outer end of each piece 48 has an inwardly pointing bevelled flange 52, which is of similar extent to the intermediate flange 50. Between these two large flanges 50, 52, there is a thinner and shorter flange 54.

Each display member is dimensioned so that it can embrace a pair of tongues 16 of a bracket 12. The different display members 40, 42, 44 differ in the width of their bases 46. The smallest member 40 is dimensioned so as to embrace an adjacent pair of widely-spaced tongues 16. The next largest member 42 is of twice the size, and the largest 44 is of three times the size. (Of course, still larger display members could be used). In each case, the arm pieces 48 extend between closely-spaced tongues 16. It can be seen that the dimensions are such that when there are a pair of display members 48 occupying adjacent sites, their adjacent arm pieces 48 are in contact.

A display member can be fitted to the support 10 so that tongues 16 thereof engage either between the intermediate flange 50 and the base 46, or between the two flanges 50, 52. This will affect whether it is the base 46 or the outer flange 52 which lies against the long leg of the L-bracket 12. When the tongues 16 are engaged between the flanges 50, 52, then the small flanges 54 engage in the slots 17 on respective tongues 16.

The illustrated apparatus may be used to mount a sign flat against a wall or other surface, or so as to project. For mounting flat against a surface, the support is fixed to the walls by screws or bolts passing through the apertures 24 (whose bevelled edges 22 provide countersinking). Generally, a pair of supports 10 will be used, one to support each end of the display members. They will then be mounted the appropriate distance apart, with their tongues 16 mutually opposed. For at least one of the supports 10, the screws will not be driven home so tightly as to prevent all relative motion. Thus one or both supports 10 can be slid outwardly to allow a display member to be engaged over tongues 16 of one support 10. Relative displacement of the supports 10 towards one another then drives the tongues 16 of the other support into the display members, which are thus securely and firmly held.

To provide a projecting sign, a support is mounted by screws or other such means driven through the panels 26, or through apertures provided by knocking out these panels. A display member can then be simply pushed over outwardly projecting tongues 16.

In either configuration, the display members can be mounted in two different orientations. It is normally desired to use the channel defined by the flanges 50 and 52 for mounting matter to be displayed, so of course one would not normally choose an arrangement in which this was pointing into the wall. Generally, information to be displayed will be provided on slats which can be inserted slidably into the channels defined by the flanges 50 and 52. Thin slats may be used which can be inserted into the narrower channels formed on either side of the small flanges 54. A slat bearing information could be mounted in the channel defined by flanges 50 and 54, whereas the front channel contained a transparent protector sheet.

Alternatively, the front channel may contain a short opaque slat which is slidable so as selectively to obscure parts of the material written on the slat behind.

A pair of supports 10 may be mounted back-to-back, with corresponding legs of their L-brackets 12 abutting. They may be clamped together by means of the spacers 30 passed through the apertures 24 (or apertures produced in the panels 26).

The illustrated support has twelve tongues 16, though of course they can be produced with any number. If a small support 10 is required, e.g. to mount a single small display member 40, this is readily obtained by breaking off the required piece along a line of weakening 28.

In use, when a support 10 is used for supporting display members extending parallel to a wall, the only part of the support 10 which is visible from the front is the flange 14. This has a pleasing, unbroken appearance, since even any remaining lines of weakness 28 do not appear on this face. Of course, if the rear face of the shorter leg of the L-bracket 12 is visible, lines 28 are visible thereon.

However, these are not very unsightly, and are in any case invisible if pairs of supports 10 are mounted back-to-back.

The display members preferably comprise aluminium extrusions.

## Claims

1. Display apparatus comprising at least one elongate display member (40, 42, 44) which is adapted to bear indicia for display, and at least one support (10) for the display member; said display member (40, 42, 44) being an elongate extrusion of C-section, defining a channel open at both ends, the extrusion having wall portions (52) at one side defining between them a narrowed mouth of the channel, and an opposed base wall portion (46) joined to said mouth-defining wall portions (52) by opposed arm pieces (48); said support (10) comprising a mounting portion (12) mountable to a surface, and at least one display member supporting means (16) projecting away from said mounting portion (12); said display member supporting means (16) and said channel being mutually dimensioned so that said supporting means (16) is insertable into the channel to provide support for the display member (40, 42, 44); characterised in that the extrusion has an opposed pair of internal ribs (50) that extend parallel to said base wall portion (46) and divide the channel interior into two longitudinally extending cavities, each of which is open at both ends of the display member (40, 42, 44); a first said cavity bounded in part by said mouth-defining wall portions (52) and said internal ribs (50) and communicating with the narrowed mouth, and the second cavity being bounded in part by said base wall portion (46) and said internal ribs (50); and said support mounting portion (12) has first and second arm portions disposed in an L-configuration, said supporting means (16) projecting from the first arm portion; and each of said cavities and the display member supporting means (16) being mutually dimensioned so that said supporting means (16) is insertable in the longitudinal direction of the display member (40, 42, 44) selectively into either cavity through either end thereof to provide said support; the spacing of the supporting means (16) from the second arm portion being such that the display member (40, 42, 44) is supportable by the supporting means (16) selectively in either of two configurations, namely in either a first configuration in which said base wall portion (46) is substantially in contact with the second arm portion and the supporting means (16) is inserted in the cavity bounded by said base wall portion (46); or a second configuration in which the second arm portion is substantially in contact with the mouth-defining wall portions (52), and the supporting means (16) is inserted in the cavity which communicates with the narrowed mouth.

2. Display apparatus according to claim 1 wherein the support (10) is selectively mountable in two configurations such that the supporting means (16) extends outwardly away from or substantially parallel to the surface to which it is mounted.

3. Display apparatus according to claim 1 or 2 including two said supports (10), each having supporting means (16), so that the member is mountable with a respective supporting means (16) received in each end of a cavity.

4. Display apparatus according to any preceding claim wherein the support (10) is an elongate element having a multiplicity of supporting means (16) along its length, whereby a multiplicity of display members (40, 42, 44) are supportable.

5. Display apparatus according to claim 4 wherein the supporting means (16) are so spaced that display members (40, 42, 44) are mountable with adjacent display members substantially in contact so as to present a substantially flush composite surface defined by the mouth-defining wall portions (52) or by the base wall portions (46) depending on whether the display members (40, 42, 44) are supported in their first or second configurations.

6. Display apparatus according to claim 4 or 5 wherein the elongate element (10) is arranged to be separable into desired lengths having desired numbers of supporting means (16).

7. Display apparatus according to any of claims 4 to 6 including a plurality of display members (40, 42, 44) having cavities of different sizes for simultaneously receiving different numbers of supporting means (16).

8. Display apparatus according to any preceding claim wherein a slat is slidably received in the first cavity with a portion of a surface of the slat visible through the mouth.

9. Display apparatus according to any preceding claim wherein the or each supporting means comprises a pair of tongues (16) projecting in parallel from the mounting portion (12) of the support, and wherein the mounting portion (12) between the tongues is adapted (24) to receive fixing elements (30) for mounting it to a surface.

10. Display apparatus according to any preceding.claim wherein the display member (40, 42, 44) has at least a second opposed pair of longitudinal ribs (54) projecting into at least one cavity parallel to the first pair of ribs (50), and the or each supporting means (16) has a pair of grooves (17) for receiving said second ribs.

11. Display apparatus according to claim 10 having a second pair of ribs (54) projecting into the first cavity and a first slat received in the part-cavity defined between the first and second pairs of ribs (50, 54), and a second slat received in the part-cavity defined between the second pair of ribs (54) and the mouth-defining wall portions (52).

## Patentansprüche

1. Anzeigevorrichtung, umfassend mindestens ein längliches Anzeigeteil (40, 42, 44), das Kennzeichen zur Schaustellung tragen kann, und mindestens einen Support (10) für das Anzeigeteil; wobei das Anzeigeteil (40, 42, 44) ein längliches Profilteil mit C-förmigem Querschnitt ist, der einen an beiden Enden offene Rinne begrenzt, wobei das Profilteil an einer Seite Wandbereiche (52) hat, die zwischen sich einen eingeschnürte Öffnung der Rinne begrenzen, und einen gegenüberliegenden Basiswandbereich (46) aufweist, der durch gegenüberliegende Armstücke (48) mit den die Öffnung begrenzenden Wandbereichen (52) verbunden ist; wobei der Support (10) einen an einer Fläche befestigbaren Befestigungsbereich (12) und mindestens ein Anzeigeteil-Abstützmittel (16) umfaßt, das von dem Befestigungsbereich (12) absteht, wobei das Anzeigeteil-Abstützmittel (16) und die Rinne gegenseitig so bemessen sind, daß das Abstützmittel (16) in die Rinne einführbar ist, um eine Abstützung für das Anzeigeteil (40, 42, 44) zu bilden; dadurch gekennzeichnet, daß das Profilteil zwei einander gegenüberliegende innere Rippen (50) aufweist, die parallel zu dem Basiswandbereich (46) verlaufen und das Innere der Rinne in zwei in Längsrichtung verlaufende Hohlräume unterteilen, von denen jeder an beiden Enden des Anzeigeteils (40, 42, 44) offen ist; wobei ein erster Hohlraum, der teilweise von den die Öffnung begrenzenden Wandbereichen (52) und von den inneren Rippen (50) begrenzt ist, mit der verjüngten Öffnung in Verbindung steht, und wobei der zweite Hohlraum teilweise von dem Basiswandbereich (46) und den inneren Rippen (50) begrenzt ist; und wobei der Befestigungsbereich (12) des Support L-förmig angeordnete erste und zweite Armbereiche hat, wobei das Abstützmittel (16) von dem ersten Armbereich absteht; und wobei jeder der besagten Hohlräume und das Anzeigeteil-Abstützmittel (16) gegenseitig so bemessen sind, daß das Abstützmittel (16) in Längsrichtung des Anzeigeteils (40, 42, 44) wahlweise in einen der Hohlräume durch eines seiner Enden einführbar ist, um die Abstützung zu bilden; wobei der Abstand des Abstützmittels (16) von dem zweiten Armbereich derart ist, daß das Anzeigeteil (40, 42, 44) wahlweise in einer von zwei Konfigurationen durch das Abstützmittel (16) abstützbar ist, nämlich entweder in einer ersten Konfiguration, in der der Basiswandbereich (46) mit dem zweiten Armbereich im wesentlichen in Berührung steht und in der das Stützmittel (16) in den von dem Basiswandbereich begrenzten Hohlraum eingesetzt ist; oder einer zweiten Konfiguration, in der der zweite Armbereich mit den die Öffnung begrenzenden Wandbereichen (52) im wesentlichen in Berührung steht und in der das Stützmittel (16) in den mit der verjüngten Öffnung in Verbindung stehenden Hohlraum eingesetzt ist.

2. Anzeigevorrichtung nach Anspruch 1, wobei der Support (10) wahlweise in zwei Konfigurationen anbringbar ist, so daß sich das Stützmittel (16) von der Fläche, an der es befestigt ist, nach außen oder im wesentlichen parallel zu dieser erstreckt.

3. Anzeigevorrichtung nach Anspruch 1 oder 2 mit zwei Supports (16), von denen jeder ein Stützmittel (16) hat, so daß das Anzeigeteil befestigbar ist, wobei ein zugeordnetes Stützmittel (16) in jedes Ende eines Hohlraums eingesetzt ist.

4. Anzeigevorrichtung nach einem der vorhergehenden Ansprüche, wobei der Support (10) ein längliches Element ist, das über seine Länge mehrere Stützmittel (16) aufweist, wodurch mehrere Anzeigeteile (40, 42, 44) abstützbar sind.

5. Anzeigevorrichtung nach Anspruch 4, wobei die Stützmittel (16) in einem solchen Abstand angeordnet sind, daß die Anzeigeteile (40, 42, 44) anbringbar sind, wobei sich benachbarte Anzeigeteile im wesentlichen berühren, um eine im wesentlichen flächenbündige zusammengesetzte Oberfläche zu bilden, die von den die Öffnung begrenzenden Wandbereichen (52) oder von den Basiswandbereichen (46) begrenzt ist, was davon abhängt, ob die Anzeigeteile (40, 42, 44) in ihrer ersten oder zweiten Konfiguration abgestützt sind.

6. Anzeigevorrichtung nach einem der Ansprüche 4 oder 5, wobei das längliche Element (10) in gewünschte Längenabschnitte unterteilbar ist, die eine gewünschte Anzahl von Stützmitteln (16) haben.

7. Anzeigevorrichtung nach einem der Ansprüche 4 bis 6 mit mehreren Anzeigeteilen (40, 42, 44), die Hohlräume unterschiedlicher Größe haben, um gleichzeitig unterschiedliche Anzahlen von Stützmitteln (16) aufzunehmen.

8. Anzeigevorrichtung nach einem der vorhergehenden Ansprüche, wobei eine Leiste in dem ersten Hohlraum verschiebar anbringbar ist, wobei ein Bereich einer Seite der Leiste durch die Öffnung sichtbar ist.

9. Anzeigevorrichtung nach einem der vorhergehenden Ansprüche, wobei das oder jedes Stützmittel zwei Zungen (16) umfaßt, die von dem Befestigungsbereich (12) des Support parallel abstehen, und wobei der Befestigungsbereich (12) zwischen den Zungen geeignet ist (24), Befestigungselemente (30) zu seiner Befestigung an einer Fläche aufzunehmen.

10. Anzeigevorrichtung nach einem der vorhergehenden Ansprüche, wobei das Anzeigeteil (40, 42, 44) mindestens zwei zweite gegenüberliegende Längsrippen (54) aufweist, die parallel zu den ersten beiden Rippen (50) in mindestens einen Hohlraum hineinragen, und wobei das oder jedes Stützmittel (16) zwei Nuten (17) zur Aufnahme der zweiten Rippen hat.

11. Anzeigevorrichtung nach Anspruch 10 mit zwei zweiten Rippen (54), die in den ersten Hohlraum hineinragen und mit einer ersten Leiste, die in den zwischen den beiden ersten und den beiden zweiten Rippen (50, 54) begrenzten Teil-Hohlraum eingesetzt ist, und einer zweiten Leiste, die in den zwischen den beiden zweiten Rippen (54) und dem die Öffnung begrenzenden Wandbereichen (52) begrenzten Teil-Hohlraums eingesetzt ist.

**Revendications**

1. Dispositif d'affichage comprenant au moins un élément d'affichage allongé (40, 42, 44) qui est adapté pour porter les indications à afficher, et au moins un support (10) pour l'élément d'affichage; ledit élément d'affichage (40, 42, 44) étant un profilé allongé de section en forme de C, définissant un canal ouvert aux deux extrémités, le profilé ayant des parties de parois (52) sur un côté définissant entre elles une ouverture rétrécie du canal, et une partie de paroi de base opposée (46) jointe auxdites parties de paroi (52) définissant l'ouverture par des pièces (48) formant bras opposées; ledit support (10) comprenant une partie de montage (12) montable sur une surface, et au moins un moyen de support d'élément d'affichage (16) se projetant depuis ladite partie de montage (12); ledit moyen de support d'élément d'affichage (16) et ledit canal étant mutuellement dimensionnés de telle façon que ledit moyen de support (16) peut être inséré dans le canal pour fournir un support pour l'élément d'affichage (40, 42, 44); caractérisé en ce que le profilé comporte une paire opposée de nervures internes (50) qui s'étendent parallèlement à ladite partie de paroi de base (46) et qui divisent l'intérieur du canal en deux cavités s'étendant longitudinalement, chacune des cavités étant ouverte aux deux extrémités de l'élément d'affichage (40, 42, 44); une première desdites cavités liée en partie par lesdites parties de paroi (52) définissant l'ouverture et lesdites nervures internes (50) et communiquant avec l'ouverture rétrécie, et la seconde cavité étant liée en partie par ladite partie de paroi de base (46) et lesdites nervures internes (50); et ladite partie de montage de support (12) comporte des première et seconde parties formant bras disposées en une configuration en forme de L, ledit moyen de support (16) se projetant depuis la première partie formant bras; et chacune desdites cavités et le moyen de support d'élément d'affichage (16) étant mutuellement dimensionnés de telle façon que ledit moyen de support (16) peut être inséré dans la direction longitudinale de l'élément d'affichage (40, 42, 44) sélectivement dans l'une ou l'autre cavité par l'une ou l'autre extrémité de celle-ci pour fournir ledit support; l'espacement du moyen de support (16) depuis la seconde partie formant bras étant tel que l'élément d'affichage (40, 42, 44) peut être supporté par le moyen de support (16) sélectivement dans l'une ou l'autre de deux configurations, à savoir soit dans une première configuration dans laquelle ladite partie de paroi de base (46) est sensiblement en contact avec la seconde partie formant bras et le moyen de support (16) est inséré dans la cavité liée par ladite partie de paroi de base (46), ou dans une seconde configuration dans laquelle la seconde partie formant bras est sensiblement en contact avec les parties de paroi (52) définissant l'ouverture, et le moyen de support (16) est inséré dans la cavité qui communique avec l'ouverture rétrécie.

2. Dispositif d'affichage selon la revendication 1, dans lequel le support (10) peut être monté sélectivement dans deux configurations de telle sorte que le moyen de support (16) s'étend vers l'extérieur depuis ou sensiblement parallèlement à la surface sur laquelle il est monté.

3. Dispositif d'affichage selon la revendication 1 ou 2, comprenant deux supports (10), ayant chacun un moyen de support (16), de sorte que l'élément peut être monté avec un moyen de support (16) respectif reçu dans chaque extrémité d'une cavité.

4. Dispositif d'affichage selon l'une quelconque des revendications précédentes, dans lequel le support (10) est un élément allongé ayant une multiplicité de moyens de support (16) sur sa longueur, de sorte qu'une multiplicité d'éléments d'affichage (40, 42, 44) peuvent être supportés.

5. Dispositif d'affichage selon la revendication 4, dans lequel les moyens de support (16) sont espacés de telle façon que les éléments d'affichage (40, 42, 44) peuvent être montés avec des éléments d'affichage adjacents sensiblement en contact de façon à présenter une surface composite sensiblement égale définie par les parties de paroi (52) définissant l'ouverture ou par les parties de paroi de base (46) selon que les éléments d'affichage (40, 42, 44) sont supportés suivant leur première ou seconde configuration.

6. Dispositif d'affichage selon la revendication 4 ou 5, dans lequel l'élément allongé (10) est disposé de façon à pouvoir être séparé en des longueurs souhaitées ayant des nombres souhaités de moyens de support (16).

7. Dispositif d'affichage selon l'une quelconque des revendications 4 à 6, comprenant une pluralité d'éléments d'affichage (40, 42, 44) ayant des cavités de différentes tailles pour recevoir simultanément des nombres différents de moyens de support (16).

8. Dispositif d'affichage selon l'une quelconque des revendications précédentes, dans lequel une lame est reçue de façon coulissante dans la première cavité, une partie d'une surface de la lame étant visible à travers l'ouverture.

9. Dispositif d'affichage selon l'une quelconque des revendications précédentes, dans lequel le ou chaque moyen de support comprend une paires de languettes (16) se projetant en parallèle depuis la partie de montage (12) entre les languettes est adaptée (24) pour recevoir des éléments de fixation (30) pour la monter sur une surface.

10. Dispositif d'affichage selon l'une quelconque des revendications précédentes, dans lequel l'élément d'affichage (40, 42, 44) comporte au moins une seconde paire opposée de nervures longitudinales (54) se projetant dans au moins une cavité parallèlement à la première paire de nervures (50), et le ou chaque moyen de support (16) comporte une paires de rainures (17) pour recevoir lesdites secondes nervures.

11. Dispositif d'affichage selon la revendication 10 ayant une seconde paire de nervures (54) se projetant dans la première cavité et une première lame reçue dans la cavité partielle définie entre les première et seconde paires de nervures (50, 54), et une seconde lame reçue dans la cavité partielle définie entre la seconde paire de nervures (54) et les parties de paroi (52) définissant l'ouverture.